# EUROPÄISCHE PATENTSCHRIFT

(11) **EP 2 768 303 B1**
(45) Veröffentlichungstag und Bekanntmachung des Hinweises auf die Patenterteilung: **15.08.2018**
(21) Anmeldenummer: 12761589.6
(22) Anmeldetag: 13.09.2012
(51) Int. Cl.: A01M 7/00

(54) **VERFAHREN ZUM BEFÜLLEN VON ZUMINDEST EINEM VORRATSBEHÄLTER**
METHOD FOR FILLING AT LEAST ONE CONTAINER
PROCÉDÉ POUR REMPLIR AU MOINS UN RÉSERVOIR

(30) Priorität: 19.10.2011 DE 102011054591
(43) Veröffentlichungstag der Anmeldung: 27.08.2014
(73) Patentinhaber: Amazonen-Werke H. Dreyer GmbH & Co. KG, 49205 Hasbergen (DE); BASF SE, 67056 Ludwigshafen am Rhein (DE)
(72) Erfinder: KIEFER, Stefan, 49074 Osnabrück (DE); WEGKAMP, Heinz - Gerd, 68642 Bürstadt (DE)
(86) Internationale Anmeldenummer: PCT/EP2012/067936
(87) Internationale Veröffentlichungsnummer: WO 2013/056908

(56) Entgegenhaltungen:
- DE-A1- 10 247 490
- FR-A1- 2 703 267

## Beschreibung

Die Erfindung betrifft ein Verfahren zum Befüllen von zumindest einem Vorratsbehälter einer landwirtschaftlichen Verteilmaschine, insbesondere einer Feldspritze mit einem ein Display und/oder eine andere Ausgabeeinrichtung aufweisenden Bordrechner.

Ein derartiges Verfahren ist beispielsweise in der DE 102 47 490 A1 beschrieben. Bei diesem bekannten Verfahren wird dem Anwender eine Rechenvorrichtung als Hilfsmittel zur Verfügung gestellt, mit dem das Anmischen der Spritzbrühe deutlich vereinfacht werden soll. Auch komplizierte Anmischungen aus verschiedenen Wirkstoffen mit unterschiedlichen Konzentrationen können so einfach angemischt werden.

Nachteilig ist jedoch, dass dem Anwender keine Hinweise gegeben werden, in welcher Weise er diese Anmischungen dann vornehmen soll.

Der Erfindung liegt die Aufgabe zu Grunde, dem Anwender ein Verfahren zur Verfügung zu stellen, so dass er die Einmischung einfach und fehlerfrei vornehmen kann.

Diese Aufgabe wird erfindungsgemäß durch ein Verfahren gemäß des Patentanspruches 1 gelöst.

Infolge dieser Maßnahme werden dem Benutzer klare und eindeutige Anweisungen gegeben, welche Arbeitsschritte er zu welchem Zeitpunkt auszuführen hat. Hierdurch werden Fehlbedienungen und Fehlanmischungen vermieden, wenn der Anwender sich an die durch das Verfahren vorgegebenen Anweisungen hält.

Damit die jeweiligen Anweisungen für die verschiedenen Arbeitsgänge immer zur Verfügung stehen, ist vorgesehen, dass die verschiedenen Arbeitsgänge zum Befüllen des Vorratsbehälters in dem Speicher des Bordrechners abgespeichert sind und beim Aufrufen des jeweiligen Befüllvorganges aufgerufen werden.

Um die durchzuführende Arbeit vorbereiten und weiterhin die durchgeführte Arbeit zusätzlich sicher dokumentieren zu können, ist vorgesehen dass der ausgegebene Plan für die jeweilige Pflanzenschutzmaßnahme zumindest folgende Angaben enthält:
- Spritzen - ID
- Name des oder der einzufüllenden Wirkstoffmittel
- Menge der jeweiligen einzufüllenden Wirkstoffmittel
- Menge der einzufüllenden Trägerflüssigkeit
- Schlaggröße
- Aufwandmenge.

Weiterhin kann der Plan noch enthalten:
- Auftragsnummer
- Schlagkennung
- Landwirt / Kunde

Um dem Anwender die Durchführung der Arbeiten mit der landwirtschaftlichen Verteilmaschine zu erleichtern, ist vorgesehen, dass der ausgegebene Plan für die jeweilige Pflanzenschutzmaßnahme zumindest einige der folgenden Anweisungen enthält:
- Ankuppeln der Befüllleitung für die Wirkstoffmittel an der Maschine
- Ankuppeln der Nachfüllleitung für die Trägerflüssigkeit
- Einfüllen einer ersten Trägerflüssigkeitsmenge
- Einfüllen von Wirkstoffmitteln
- Einfüllen von Wirkstoffmitteln in Pulver- oder -Granulatform in die Einspülschleuse
- Bestätigungsabfrage an den Anwender
- Ankuppeln von Wirkstoffgebinden an Befüllstation
- Auswechseln von leeren Wirkstoffgebinden
- Auffüllen des Vorratsbehälters mit Trägerflüssigkeit
- Abkoppeln der einzelnen Befüllleitungen
- Ende des Befüllvorganges.

Weitere Einzelheiten der Erfindung sind der Beispielsbeschreibung zu entnehmen. Die Bezeichnung zeigt
ein Ablaufschema des erfindungsgemäßen Verfahrens in Form eines Flussdiagrammes.

Das verfahrensgemäße Befüllmanagement gibt Anweisungen zum Befüllen des Vorratsbehälters einer landwirtschaftlichen Feldspritze. Die Feldspritze weist einen Bordrechner mit einem Display und/oder einer anderen Ausgabeeinrichtung auf. In dem Speicher des Bordrechners sind ein oder mehrere Befüllprogramme zum Befüllen des Vorratsbehälters mit Trägerflüssigkeit und Wirkstoffmitteln für unterschiedliche Behandlungseinsätze der Feldspritze für verschiedene Pflanzenschutzmaßnahmen abgespeichert.

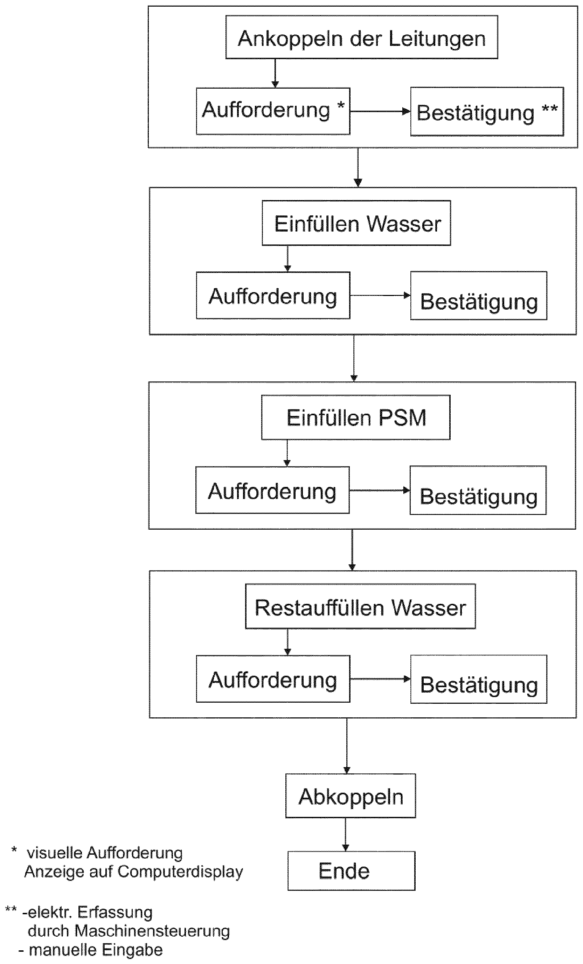

Wenn eine bestimmte Pflanzenschutzmaßnahme durchgeführt werden soll, ruft der Anwender durch entsprechendes Betätigen des Bordrechners diese entsprechende Pflanzenschutzmaßnahme auf. Der Bordrechner gibt dann über das Display oder die Ausgabevorrichtung einen Ablaufplan mit Anweisungen zum Befüllen des Vorratsbehälters der Feldspritze für den Anwender aus. Entsprechend des Planes wird die Befüllung des Vorratsbehälters mit Trägerflüssigkeit und den für den entsprechenden Einsatzfall vorgesehenen Wirkstoffmitteln in der jeweils vorgesehenen Weise und mit der vorgesehenen Menge durchgeführt. Hierbei wird in der Anwender durch den Bordrechner durch den Befüllvorgang mittels der entsprechenden Darstellungen und/oder Anweisungen auf dem Display und/oder einer anderen Ausgabeeinrichtung geleitet, wie dies die Zeichnung zeigt. Hierbei sind die verschiedenen Arbeitsgänge zum Befüllen des Vorratsbehälters in dem Speicher des Bordrechners abgespeichert und werden beim Aufrufen des jeweiligen Befüllvorganges aufgerufen.

Die in dem Speicher des Bordrechners abgelegten Daten zum Befüllen des Vorratsbehälters mit Trägerflüssigkeit und Wirkstoffmittel werden mit geeigneten Datenübertragungsmitteln, wie beispielsweise WLAN, USB-Stick, GSM, UTMS, Bluetooth, etc. übertragen. Es ist auch eine Online-Übertragung denkbar, so dass die Daten gar nicht auf dem Bordrechner als solches gespeichert werden müssen. Diese Schnittstellen können hier beispielsweise Ackerschlagkarteien sein. Hierbei wird ein entsprechendes Format verwendet, welches die Kommunikation zwischen den verschiedenen Systemen ermöglicht.

Der jeweils ausgegebene Plan für die jeweilige Pflanzenschutzmaßnahme enthält zumindest folgende Angaben:
- Spritzen - ID
- Name des oder der einzufüllenden Wirkstoffmittel
- Menge der jeweiligen einzufüllenden Wirkstoffmittel
- Menge der einzufüllenden Trägerflüssigkeit
- Schlaggröße
- Aufwandmenge.

Weiterhin kann der Plan noch enthalten:
- Auftragsnummer
- Schlagkennung
- Landwirt / Kunde.

Außerdem enthält der Plan für die jeweilige Pflanzenschutzmaßnahme folgende Anweisungen:
- Ankuppeln der Befüllleitung für die Wirkstoffmittel an der Maschine
- Ankuppeln der Nachfüllleitung für die Trägerflüssigkeit
- Einfüllen einer ersten Trägerflüssigkeitsmenge
- Einfüllen von Wirkstoffmitteln
   - Einfüllen von Wirkstoffmitteln in Pulver- oder Granulatform in die Einspülschleuse
- Bestätigungsabfrage an den Anwender
- Ankuppeln von Wirkstoffgebinden an Befüllstation
- Auswechseln von leeren Wirkstoffgebinden
- Auffüllen des Vorratsbehälters mit Trägerflüssigkeit
- Abkoppeln der einzelnen Befüllleitungen
- Ende des Befüllvorganges.

Somit wird ein Befüllmanagement durch das erfindungsgemäße Verfahren beschrieben, welches anhand des Flussdiagrammes gemäß der Zeichnung nochmals kurz in den wesentlichen Zügen erläutert wird:
Auf dem ausgegebenen Plan wird der Anwender zunächst aufgefordert die erforderlichen Leitungen anzukoppeln. Diese Anforderung wird visuell auf dem Display des Bordcomputers angezeigt. Wenn dieses erfolgt ist, wird der Anwender dies durch eine manuelle Eingabe an dem Bordcomputer bestätigen oder aber es ist ein Sensor vorhanden, so dass eine elektronische Erfassung durch die Maschinensteuerung erfolgt und entsprechend an den Bordrechner übermittelt wird.

Anschließend muss die Trägerflüssigkeit in Form von Wasser in den Vorratsbehälter eingefüllt werden. Hierdurch wird der Anwender durch eine Anzeige auf dem Display aufgefordert. Wenn der Vorratsbehälter mit Trägerflüssigkeit entsprechend des Planes gefüllt ist, erfolgt wiederum eine Bestätigung durch den Anwender.

Anschließend wird durch die Anzeige auf dem Display der Anwender dazu aufgefordert, Pflanzenschutzmittel einzufüllen. Wenn der Anwender entsprechend der Aufforderung gemäß des Planes die jeweiligen Pflanzenschutzmittel (Wirkstoffmittel) dem System zugeführt hat, erfolgt wiederum eine entsprechende Bestätigung.

Anschließend wird der Anwender durch eine entsprechende Anzeige und/oder Ausgabe aufgefordert, die restliche Menge an Trägerflüssigkeit, nämlich Wasser dem System zu zuführen, das heißt in den Vorratsbehälter einzufüllen. Wenn dies erfolgt ist, erfolgt wiederum eine Bestätigung, wie bereits vorgehend beschrieben.

Wenn sämtliche Maßnahmen zur Befüllung des Vorratsbehälters mit Trägerflüssigkeit und den als Wirkstoffmittel ausgebildeten Pflanzenschutzmitteln erfolgt ist, können nach der entsprechenden Aufforderung durch den Anwender die entsprechenden Leitungen von dem System abgekoppelt werden. Der Befüllvorgang ist dann beendet.

## Patentansprüche

1. Verfahren zum Befüllen von zumindest einem Vorratsbehälter einer landwirtschaftlichen Verteilmaschine, insbesondere einer Feldspritze mit einem ein Display und/oder eine andere Ausgabeeinrichtung aufweisenden Bordrechner, wobei in dem Speicher des Bordrechners ein oder mehrere Befüllprogramme zum Befüllen des Vorratsbehälters mit Trägerflüssigkeit und Wirkstoffmitteln für unterschiedliche Behandlungseinsätze der Feldspritze für verschiedene Pflanzenschutzmaßnahmen abgespeichert sind, wobei beim Aufrufen einer bestimmten durchzuführenden Pflanzenschutzmaßnahme über eine Ausgabevorrichtung des Bordcomputers ein Ablaufplan mit Anweisungen für den Bediener auf dem Display und/oder in anderer geeigneter Weise für den Bediener ausgegeben wird, wobei entsprechend des Planes der Vorratsbehälter der Verteilmaschine mit Trägerflüssigkeit und den für den Einsatzfall vorgesehenen Wirkstoffmittel in der vorgesehenen Weise und mit der vorgesehenen Menge jeweils befüllt wird, wobei der Bediener durch den Bordrechner durch den Befüllvorgang mittels der entsprechenden Darstellungen und/oder Anweisungen auf dem Display und/oder einer anderen Ausgabeeinrichtung geleitet wird.

2. Verfahren nach Anspruch 1, **dadurch gekennzeichnet, dass** die verschiedenen Arbeitsgänge zum Befüllen des Vorratsbehälters in dem Speicher des Bordrechners abgespeichert sind und beim Aufrufen des jeweiligen Befüllvorganges aufgerufen werden.

3. Verfahren nach zumindest einem der vorstehenden Ansprüche, **dadurch gekennzeichnet, dass** der ausgegebene Plan für die jeweilige Pflanzenschutzmaßnahme zumindest folgende Angaben enthält:
- Spritzen - ID
- Name des oder der einzufüllenden Wirkstoffmittel
- Menge der jeweiligen einzufüllenden Wirkstoffmittel
- Menge der einzufüllenden Trägerflüssigkeit
- Schlaggröße
- Aufwandmenge.

4. Verfahren nach zumindest einem der vorstehenden Ansprüche, **dadurch gekennzeichnet, dass** der ausgegebene Plan für die jeweilige Pflanzenschutzmaßnahme zumindest einige der folgenden Anweisungen enthält:
- Ankuppeln der Befüllleitung für die Wirkstoffmittel an der Maschine
- Ankuppeln der Nachfüllleitung für die Trägerflüssigkeit
- Einfüllen einer ersten Trägerflüssigkeitsmenge
- Einfüllen von Wirkstoffmitteln
- Einfüllen von Wirkstoffmitteln in Pulver- oder Granulatform in die Einspülschleuse
- Bestätigungsabfrage an den Anwender
- Ankuppeln von Wirkstoffgebinden an Befüllstation
- Auswechseln von leeren Wirkstoffgebinden
- Auffüllen des Vorratsbehälters mit Trägerflüssigkeit
- Abkoppeln der einzelnen Befüllleitungen
- Ende des Befüllvorganges.

## Claims

1. Method for filling at least one storage container of an agricultural distributing machine, in particular a field sprayer with an on-board computer having a display and/or another output device, wherein one or more filling programs for filling the storage container with carrier liquid and with active compositions for different treatment uses of the field sprayer for various plant protection measures are stored in the memory of the on-board computer, wherein, when a certain plant protection measure to be carried out is called up, a plan of operation with instructions for the operator is output via an output device of the on-board computer on the display and/or in another suitable manner for the operator, wherein, in accordance with the plan, the storage container of the distributing machine is in each case filled with carrier fluid and the active compositions provided for the use situation, in the intended manner and with the intended quantity, wherein the operator is guided by the on-board computer through the filling process by means of the appropriate illustrations and/or instructions on the display and/or on another output device.

2. Method according to Claim 1, **characterized in that** the various working steps for filling the storage container are stored in the memory of the on-board computer and are called up when the respective filling operation is called up.

3. Method according to at least one of the preceding claims, **characterized in that** the output plan for the respective plant protection measure contains at least the following details:
- spray - ID
- name of the active composition(s) to be poured in
- quantity of the respective active compositions to be poured in
- quantity of the carrier liquid to be poured in
- field size
- quantity needed.

4. Method according to at least one of the preceding claims, **characterized in that** the output plan for the respective plant protection measure contains at least some of the following instructions:
- coupling the filling line for the active compositions to the machine
- coupling the refilling line for the carrier liquid
- pouring in a first quantity of carrier liquid
- pouring in active compositions
- pouring in active compositions in powder or granular form into the induction sluice
- confirmation inquiry to the user
- coupling active composition containers to the filling station
- exchanging empty active composition containers
- topping up the storage container with carrier liquid
- decoupling the individual filling lines
- end of the filling operation.

## Revendications

1. Procédé, destiné au remplissage d'au moins un réservoir d'un épandeur agricole, notamment d'un pulvérisateur agricole, doté d'un ordinateur de bord comportant un écran et/ou un autre dispositif d'édition, dans la mémoire de l'ordinateur de bord étant mémorisé(s) un ou plusieurs programme(s) de remplissage, pour remplir le réservoir d'un liquide porteur et de principes actifs pour différentes applications de traitement du pulvérisateur, destinées à différentes actions phytosanitaires, sachant que lors de l'interrogation d'une action phytosanitaire précise qui doit être réalisée, un organigramme avec des instructions à l'attention de l'opérateur est édité par l'intermédiaire d'un dispositif d'édition de l'ordinateur de bord sur l'écran et/ou d'une autre manière adaptée à l'opérateur, en fonction de l'organigramme, le réservoir de l'épandeur se remplissant respectivement de liquide porteur et des principes actifs prévus pour le cas d'application, de la manière prévue et dans la quantité prévue, l'opérateur étant conduit par l'ordinateur de bord à travers le processus de remplissage au moyen des représentations et/ou instructions correspondantes sur l'écran et/ou sur un autre dispositif d'édition.

2. Procédé selon la revendication 1, **caractérisé en ce que** les différentes étapes de travail pour le remplissage du réservoir sont mémorisées dans la mémoire de l'ordinateur de bord et sont interrogées lors de l'interrogation du processus de remplissage respectif.

3. Processus selon au moins l'une quelconque des revendications précédentes, **caractérisé en ce que** l'organigramme édité pour l'action phytosanitaire respective contient au moins les informations suivantes :
- l'ID du pulvérisateur
- le nom du ou des principe(s) actif(s) à verser
- la quantité des principes actifs correspondants à verser
- la quantité du liquide porteur à verser
- la taille de la parcelle
- les doses.

4. Procédé selon au moins l'une quelconque des revendications précédentes, **caractérisé en ce que** l'organigramme édité pour l'action phytosanitaire respective contient au moins certaines des instructions suivantes :
- le couplage du conduit de remplissage des principes actifs sur la machine
- le couplage du conduit d'appoint en liquide porteur
- le remplissage avec une première quantité de liquide porteur
- le remplissage avec des principes actifs,
- le remplissage du bac d'incorporation de principes actifs sous forme de poudre ou de granulés
- la demande de confirmation par l'utilisateur,
- le couplage de contenants de principes actifs sur le poste de remplissage
- le remplacement de contenants de principes actifs vides
- l'appoint de liquide porteur dans le réservoir
- le découplage de chacun des conduits de remplissage
- l'achèvement du processus de remplissage.
